# EUROPÄISCHE PATENTSCHRIFT

(11) **EP 2 014 933 B1**
(45) Veröffentlichungstag und Bekanntmachung des Hinweises auf die Patenterteilung: **08.12.2010**
(21) Anmeldenummer: 08011665.0
(22) Anmeldetag: 27.06.2008
(51) Int. Cl.: F16B 39/10

(54) **Fixiervorrichtung für Schrauben und/oder Muttern**
Fixing device for screws and/or nuts
Dispositif de fixation pour vis et/ou écrous

(30) Priorität: 09.07.2007 DE 102007031991
(43) Veröffentlichungstag der Anmeldung: 14.01.2009
(73) Patentinhaber: VEGA Grieshaber KG, 77709 Wolfach (DE)
(72) Erfinder: Dietmeier, Jürgen, 77756 Hausach (DE)
(74) Vertreter: Patentanwälte Westphal, Mussgnug & Partner

(56) Entgegenhaltungen:
- DE-A1- 3 331 430
- DE-A1-102005 051 349
- DE-C- 124 602
- US-A- 1 088 515
- US-A- 3 493 026

## Beschreibung

Die Erfindung betrifft eine Fixiervorrichtung für Schrauben und/oder Muttern mit einem Außenprofil mit mehreren Kanten.

Insbesondere in Bereichen in denen Schraubverbindungen Vibrationen oder anderen von außen wirkenden Kräften ausgesetzt sind, die ein Lösen oder Lockern der Schraubverbindung bewirken können, ist es notwendig eine zuverlässige Sicherung gegen Aufdrehen bzw. eine Lockerung der Schraubverbindung zu gewährleisten.

Aus dem Stand der Technik ist es bisher bekannt, Schraubverbindungen mittels einer Verklebung gegen Aufdrehen zu sichern. Für eine derartige Schraubensicherung wird eine Verklebung entweder direkt am Schraubengewinde oder zwischen dem Schraubenkopf und einem feststehenden Bauteil vorgenommen. Eine derartige Klebeverbindung gewährleistet einen sicheren Aufdrehschutz bewirkt jedoch eine feststehende Verbindung, bei der nach einem öffnen der Schraubverbindung ein erneutes Sichern durch eine Klebung erst nach einer Reinigung der Kontaktflächen wieder vorgenommen werden kann. Des Weiteren ist es nachteilhaft, dass bei einem zu starken Klebstoff oder bei einem zu großflächigen Auftrag des Klebstoffs eine so fixierte Schraubverbindung nicht mehr zu öffnen sein kann.

Im Bereich lösbarer Schraubverbindungen, insbesondere im Bereich elektrischer Verbindungen ist es wünschenswert beispielsweise frei drehende Muttern an elektrischen Verbindungsanschlüssen zuverlässig gegen ein Aufdrehen zu sichern und gleichzeitig die Lösbarkeit einer solchen Schraubverbindung nicht einzuschränken.

Aus den Publikationen US 3,493,026, US 1,088,515, DE 10 2005 051 349 A1, DE 124602 sowie DE 33 31 430 A1 sind Fixiervorrichtung für Schrauben bzw. Muttern bekannt. Sämtliche Vorrichtungen verlangen jedoch entweder eine bestimmte Winkelstellung für die zu sichernde Schraube bzw. Mutter oder müssen umständlich auf den Schraubenkopf bzw. die Mutter aufgesteckt werden.

Es ist die Aufgabe der Erfindung eine Fixiervorrichtung für Schrauben und/oder Muttern bereitzustellen, die einen sicheren Aufdrehschutz bietet und gleichzeitig die Flexibilität und Lösbarkeit der Schraubverbindung nicht einschränkt.

Diese Aufgabe wird gelöst durch eine Fixiervorrichtung mit den Merkmalen des Patentanspruchs 1.

Es wird eine Fixiervorrichtung für Schrauben und/oder Muttern mit einem Außenprofil mit mehreren Kanten vorgeschlagen, wobei die Fixiervorrichtung an wenigstens zwei Seiten des Außenprofils formschlüssig angepasst ist und mittels eines Befestigungselements formschlüssig an dem Außenprofil fixierbar ist. Eine derartige Fixiervorrichtung hat den Vorteil, dass eine Fixierung einer Schraube und/oder Mutter mit einem formschlüssig an das Außenprofil der Schraube und/oder Mutter angepassten Befestigungselement erfolgt und so ein direkter Eingriff in die Schraubverbindung am Gewinde und/oder zwischen dem Schraubenkopf oder der Mutter und einem feststehenden Bauteil vermieden werden kann.

Vorteilhafterweise ist die Fixiervorrichtung als ein seitlich abklappbarer Bügel mit einem als Klemmschraube ausgebildetem Befestigungselement ausgebildet, wobei die Klemmschraube durch Sicherungsscheiben gegen Lockerung gesichert ist. Eine derartige Ausgestaltung der Fixiervorrichtung hat den Vorteil, dass sie zu Montagezwecken einfach entfernt werden kann und trotzdem einen sicheren Schutz gegen Aufdrehen bietet. Ein weiterer Vorteil ist, dass ein seitlich abklappbarer Bügel zum Lockern der Schraubverbindung nicht vollständig entfernt werden muss, sondern durch ein Schwenken aus dem Schraubbereich ein Lösen der Schraube und/oder der Mutter ermöglicht.

Erfindungsgemäß weist der Bügel eine kreisbogenförmig verlaufende Nut auf, durch welche er mittels der Klemmschraube fixiert werden kann. Der Bügel ist vorteilhafterweise aus Metall oder Kunststoff gefertigt. Durch eine kreisbogenförmig verlaufende Nut in dem Bügel wird erreicht, dass die Klemmschraube an unterschiedlichen Stellen der Nut fixiert werden kann und so eine Anpassung der Bügelausrichtung an die Eindrehposition der Schraube und/oder Mutter möglich ist. Je nach gegebenen Anforderungen kann der Bügel aus Metall oder Kunststoff gefertigt werden.

In einer bevorzugten Ausgestaltungsform der Fixiervorrichtung beträgt ein Winkel zwischen zwei formschlüssig angepassten Seiten des Bügels 120°. Eine so ausgestaltete Fixiervorrichtung ist formschlüssig an Außensechskantschrauben angepasst.

Die Verwendung einer derartigen Fixiervorrichtung ist insbesondere in einem Gerät zur Füllstandsmessung vorteilhaft. Die Vorteile der Erfindung kommen besonders in diesem Einsatzbereich zum tragen, da beispielsweise bei auf Ultraschall basierten Füllstandsmessgeräten häufig Vibrationen auftreten, wodurch eine Schraubensicherung notwendig wird. Trotzdem muss in diesem Bereich die Demontierbarkeit weiterhin gewährleistet bleiben.

Weitere Vorteile der Erfindung ergeben sich aus der nachfolgenden Beschreibung eines Ausführungsbeispiels und Bezugnahme auf die beigefügten Figuren.

Es zeigen:
- Fig. 1: einen Schwingungskörper eines Füllstandsmessgerätes mit einem verschraubten elektrischen Steckverbinder und einer erfindungsgemäßen Fixiervorrichtung,
- Fig. 2: eine Draufsicht auf einen Schnitt entlang der Linie A-A aus Figur 1,
- Fig. 3: die Darstellung aus Figur 3 mit seitlich abgeklappter Fixiervorrichtung.

Soweit nicht anders angegeben bezeichnen gleiche Bezugszeichen identische oder funktionsgleiche Bauelemente.

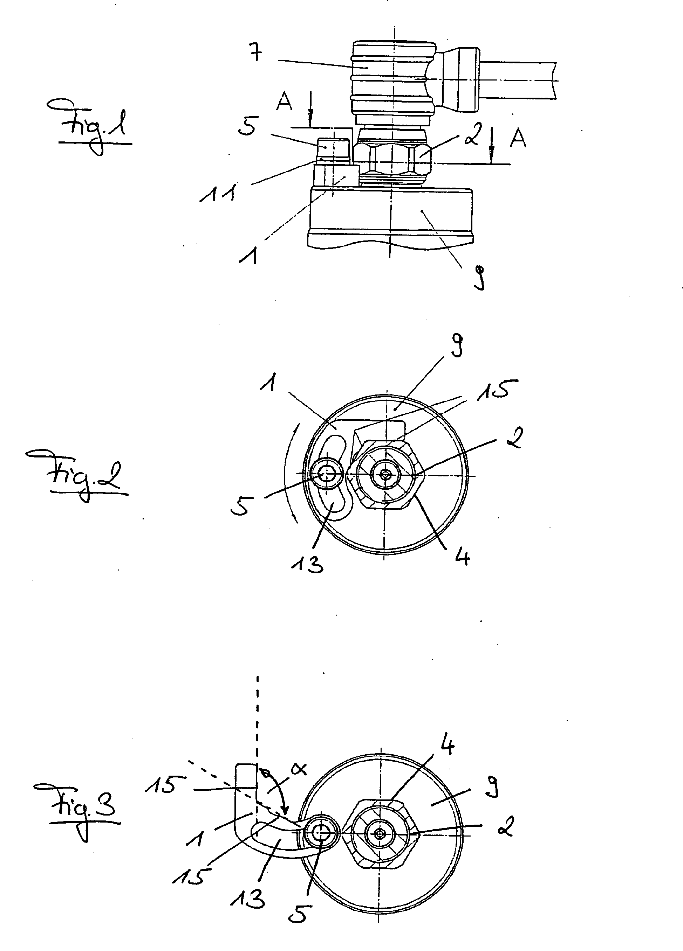

In Figur 1 ist eine seitliche Ansicht eines Schwingungskörpers 9 eines Füllstandsmessgeräts gezeigt, die an ihrer Oberseite mittels einem durch eine Mutter 2 fixierten Steckverbinder 7 elektrisch kontaktiert wird. Die Mutter 2 ist durch eine Fixiervorrichtung 1, die mittels einer Klemmschraube 5 drehfest mit dem Schwingungskörper 9 verbunden ist gegen Aufdrehen gesichert. Die Klemmschraube 5 ist wiederum durch Sicherungsscheiben 11 gegen Aufdrehen gesichert.

Figur 2 zeigt einen Schnitt entlang der Linie A-A aus Figur 1. In dieser Darstellung ist die Wirkungsweise der Fixiervorrichtung 1 besonders gut zu erkennen. Die Fixiervorrichtung 1 hat einen bogenförmig ausgebildeten Körper und weist zwei Seiten 15 auf, die einem Außenprofil 4 der Mutter 2 formschlüssig angepasst sind. Des Weiteren weist die Fixiervorrichtung 1 eine kreisbogenförmig verlaufende Nut 13 auf, durch welche die Fixiervorrichtung 1 mit dem Schwingungskörper 9 verschraubbar ist. Durch die kreisbogenförmig verlaufende Nut 13 ist es möglich die Fixiervorrichtung 1 immer optimal zum Außenprofil 4 der Mutter 2 in Position zu bringen und durch die Klemmschraube 5 zu fixieren. Eine derartige Ausgestaltung ist in vielen Bereichen sinnvoll, da die Endposition einer Mutter oftmals nicht vorhersagbar ist. Durch eine Anordnung des Fixierelements 1 in Schraubrichtung der Klemmschraube 5 wird wird gewährleistet, dass die Fixiervorrichtung 1 beim Festschrauben der Klemmschraube 5 noch fester an das Außenprofil 4 der Mutter 2 gepresst wird.

Figur 3 zeigt die Darstellung aus Figur 2 wobei die Fixiervorrichtung in einer seitlich weggeklappten Position dargestellt ist. Durch ein Lockern der Klemmschraube 5 ist dies leicht zu Erreichen, sodass die Mutter 2 annähernd frei zugänglich und insbesondere aufschraubbar ist. In dieser Darstellung ist besonders gut zu erkennen, dass ein Winkel α zwischen den beiden Seiten 15 der Fixiervorrichtung 1 120° beträgt, was dem Winkel zwischen den Seiten eines Außenprofils 4 einer Außensechskantmutter entspricht. Es ist jedoch auch eine Anpassung an andere Außenprofile, beispielsweise Mehrkant- oder Vielzahn-Profile denkbar.

### Bezugszeichenliste

- 1: Fixiervorrichtung/Bügel
- 2: Schraube/Mutter
- 4: Außenprofil
- 5: Befestigungselement/Klemmschraube
- 7: Stecker
- 9: Schwingungskörper

- 11: Sicherungsscheibe
- 13: Nut
- 15: Seite

- α: Winkel

## Patentansprüche

1. Fixiervorrichtung (1) für Schrauben und/oder Muttern (2) mit einem Außenprofil (4) mit mehreren Kanten, wobei die Fixiervorrichtung folgendes aufweist:
einen an wenigstens zwei Seiten des Außenprofils formschlüssig angepassten, seitlich von der Schraube bzw. der Mutter abklappbaren Bügel (1),
ein Befestigungselement (5) für den Bügel,
**dadurch gekennzeichnet, dass** der Bügel eine kreisbogenförmig verlaufende Nut (3) aufweist, durch die der Bügel (1) mittels dem Befestigungselement (5) formschlüssig an dem Außenprofil (4) fixierbar ist.

2. Fixiervorrichtung (1) nach Anspruch 1,
**dadurch gekennzeichnet, dass** das Befestigungselement (5) als Klemmschraube ausgebildet ist.

3. Fixiervorrichtung (1) nach einem der vorhergehenden Ansprüche,
**dadurch gekennzeichnet, dass** die Klemmschraube (5) durch Sicherungsscheiben (11) gegen Lockerung gesichert ist.

4. Fixiervorrichtung (1) nach einem der vorhergehenden Ansprüche,
**dadurch gekennzeichnet, dass** der Bügel (1) aus Metall gefertigt ist.

5. Fixiervorrichtung (1) nach einem der Ansprüche 1 bis 3,
**dadurch gekennzeichnet, dass** der Bügel (1) aus Kunststoff gefertigt ist.

6. Fixiervorrichtung (1) nach einem der vorhergehenden Ansprüche,
**dadurch gekennzeichnet, dass** ein Winkel zwischen den zwei formschlüssig angepassten Seiten des Bügels 120° beträgt.

7. Verwendung einer Fixiervorrichtung (1) nach einem der Ansprüche 1 bis 6 in einem Gerät zur Füllstandsmessung.

## Claims

1. A fixing device (1) for bolts and/or nuts (2) with an external profile (4) with a plurality of edges, wherein the fixing device comprises the following:
a bracket (1) adapted to at least two sides of the external profile in a positively locking manner and capable of being swung laterally away from the bolt or nut respectively,
a fastening element (5) for the bracket,
**characterized in that** the bracket has a groove (13) which extends in the shape of an arc and by which the bracket (1) is capable of being fixed to the external profile (4) in a positively locking manner by means of the fastening element (5).

2. A fixing device (1) according to claim 1, **characterized in that** the fastening element (5) is designed in the form of a clamping screw.

3. A fixing device (1) according to one of the preceding claims, **characterized in that** the clamping screw (5) is prevented from becoming loose by locking washers (11).

4. A fixing device (1) according to any one of the preceding claims, **characterized in that** the bracket (1) is produced from metal.

5. A fixing device (1) according to any one of claims 1 to 3, **characterized in that** the bracket (1) is produced from plastics material.

6. A fixing device (1) according to any one of the preceding claims, **characterized in that** an angle between the two sides of the bracket adapted in a positively locking manner amounts to 120°.

7. Use of a fixing device (1) according to any one of claims 1 to 6 in an appliance for measuring the filling level.

## Revendications

1. Dispositif de blocage (1) de vis et/ou d'écrous (2) ayant un profil extérieur (4) à plusieurs arêtes, le dispositif de blocage comprenant :
- une boucle (1), rabattable sur le côté de la vis ou de l'écrou, et adaptée par la forme à au moins deux côtés du profil extérieur,
- un élément de fixation (5) pour la boucle,
dispositif de blocage **caractérisé en ce que**
la boucle a une rainure (13) en arc de cercle par laquelle la boucle (1) se bloque par une liaison par la forme sur le profil extérieur (4) par l'intermédiaire de l'élément de fixation (5).

2. Dispositif de blocage (1) selon la revendication 1,
**caractérisé en ce que**
l'élément de fixation (5) est en forme de vis de serrage.

3. Dispositif de blocage (1) selon l'une des revendications précédentes,
**caractérisé en ce que**
la vis de serrage (5) est protégée contre le desserrage par des rondelles anti desserrage (11).

4. Dispositif de blocage (1) selon l'une des revendications précédentes,
**caractérisé en ce que**
l'arceau (1) est fabriqué en métal.

5. Dispositif de blocage (1) selon l'une des revendications 1 à 3,
**caractérisé en ce que**
l'arceau (1) est fabriqué en matière plastique.

6. Dispositif de blocage (1) selon l'une des revendications précédentes,
**caractérisé en ce que**
l'angle entre les deux côtés de la boucle adaptés pour la liaison par la forme, est de 120°.

7. Application d'un dispositif de blocage (1) selon l'une des revendications 1 à 6 à un appareil de mesure de niveau de remplissage.
